# EUROPEAN PATENT APPLICATION

(11) **EP 3 799 976 A1**
(43) Date of publication of application: **07.04.2021**
(21) Application number: 19216331.9
(22) Date of filing: 13.12.2019
(51) Int. Cl.: B22F 3/105, B29C 64/153, B29C 64/214, B29C 64/241, B33Y 10/00, B33Y 30/00

(54) **CHANGEABLE RECOATER APPROACH ANGLE**

(30) Priority: 03.10.2019 US 201916592388
(71) Applicant: Hamilton Sundstrand Corporation, Charlotte, NC 28217-4578 (US)
(72) Inventor: BRANDENBURG, Loren O., Stafford Springs, CT 06076 (US); JAGDALE, Vijay Narayan, South Windsor, CT 06074 (US)
(74) Representative: Dehns

(57) **Abstract**

A method of forming a component by powder bed fusion includes depositing a bed of metal powder on a platform (18) by moving a recoater blade (14) across the platform at a first angle of approach. A layer of the component is formed by sintering at least a portion of the bed of metal powder. A subsequent bed of metal powder is deposited on the platform by moving the recoater blade across the platform and the bed of metal powder at a second angle of approach. A subsequent layer of the component is formed by sintering at least a portion of the subsequent bed of metal powder.

## Description

### BACKGROUND

The present disclosure relates to additive manufacturing, and in particular, powder bed fusion additive manufacturing.

Additive manufacturing is a popular manufacturing technique due to its ability to manufacture complex parts in a single manufacturing process. Various materials, including, plastic, metal, or concrete, are currently used in current additive manufacturing practice. Presently, there are seven categories of additive manufacturing: (1) material extrusion; (2) material jetting; (3) directed energy deposition; (4) sheet lamination; (5) binder jetting; (6) vat photopolymerization; and (7) powder bed fusion.

Powder bed fusion processes for additive manufacturing, such as Direct Metal Laser Sintering (DMLS) typically involves iteratively depositing powder layers and melting/fusing select regions of the layers using an energy beam to build up a component layer-by-layer.

### SUMMARY

In one embodiment of the present disclosure, a method of forming a component by powder bed fusion includes depositing a bed of metal powder on a platform by moving a recoater blade across the platform at a first angle of approach. A layer of the component is formed by sintering at least a portion of the bed of metal powder. A subsequent bed of metal powder is deposited on the platform by moving the recoater blade across the platform and the bed of metal powder at a second angle of approach. A subsequent layer of the component is formed by sintering at least a portion of the subsequent bed of metal powder.

In another embodiment of the present disclosure, a powder bed fusion machine includes a platform and a recoater. The recoater includes a leading edge. The powder bed fusion machine also includes an actuator configured to adjust an angle of approach of the leading edge of the recoater.

In another embodiment, a powder bed fusion machine includes a platform and a recoater blade. The platform includes a first edge. The recoater blade includes a leading edge. The powder bed fusion machine includes at least one actuator configured to adjust an angle of approach of the leading edge of the recoater relative to the first edge of the platform.

Persons of ordinary skill in the art will recognize that other aspects and embodiments are possible in view of the entirety of the present disclosure, including the accompanying figures.

### BRIEF DESCRIPTION OF THE DRAWINGS

FIG. 1 is a perspective view of a powder bed fusion machine.
FIG. 2 is a top view of a powder bed fusion machine.
FIG. 3 is another top view of a powder bed fusion machine.

While the above-identified drawing figures set forth one or more embodiments, other embodiments are also contemplated. It should be understood that numerous other modifications and embodiments can be devised by those skilled in the art, which fall within the scope of the invention defined by the claims. The figures may not be drawn to scale, and applications and embodiments may include features not specifically shown in the drawings. Like reference numerals identify similar structural elements.

### DETAILED DESCRIPTION

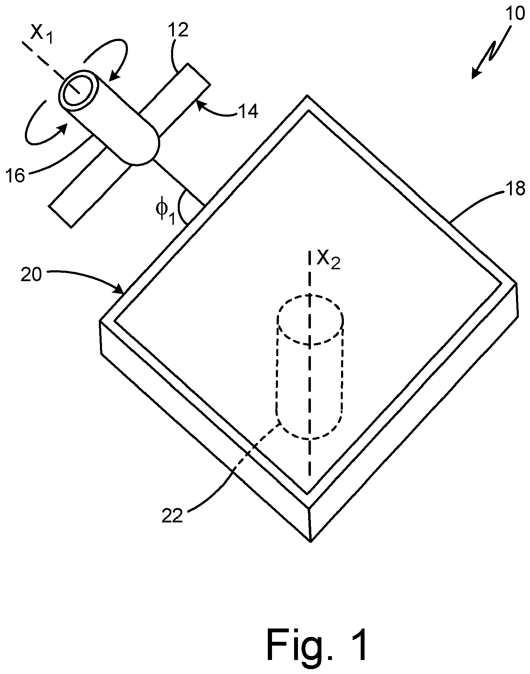

The disclosure relates to a powder bed fusion machine with a changeable approach angle. The changeable approach angle decreases the likelihood of failures due to collisions of the recoater blade and the formed layers of a component when making the component in the powder bed fusion machine. The disclosure also relates to a method of forming utilizing the powder bed fusion machine with the changeable approach angle. The powder bed fusion machine is described below with reference to FIGS. 1-3.

FIG. 1 is a perspective view of powder bed fusion machine 10. As shown in FIG. 1, powder bed fusion machine 10 includes recoater 12 and platform 18. In the embodiment of FIGS. 1-3, platform 18 is rectangular, however, in other embodiements, platform 18 can be circular, triangular, or any other shape that can serve as platform 18 of powder bed fusion machine 10. In the embodiment of FIGS. 1-3, recoater 12 is rectangular, however in other embodiments, recoater 12 can be made from many different geometries. Recoater 12 includes blade or leading edge 14, actuator 16, and axis X₁. Leading edge 14 of recoater 12 can be linear or any arbitrary shape from the top, front, or side view. Platform 18 includes first edge 20, actuator 22 and axis X₂. Approach angle φ₁ is defined as the angle between first edge 20 and the direction at which recoater 12 is moving. In other embodiments, approach angle approach angle φ₁ can be defined as the angle between the direction at which recoater 12 is moving and a predetermined axis.

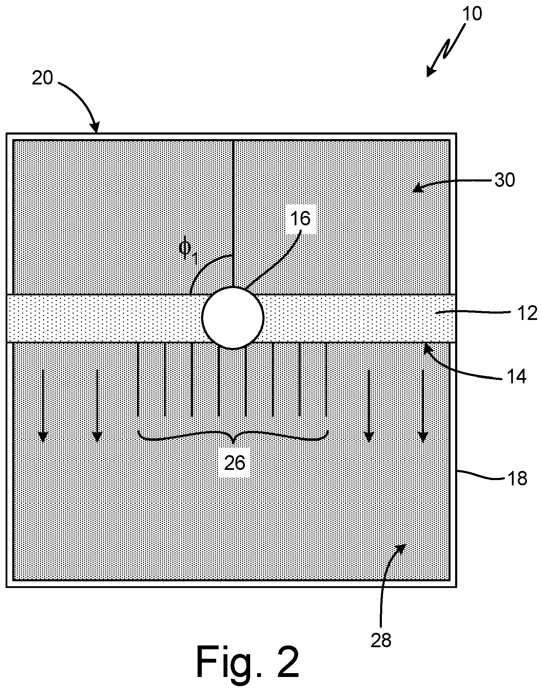

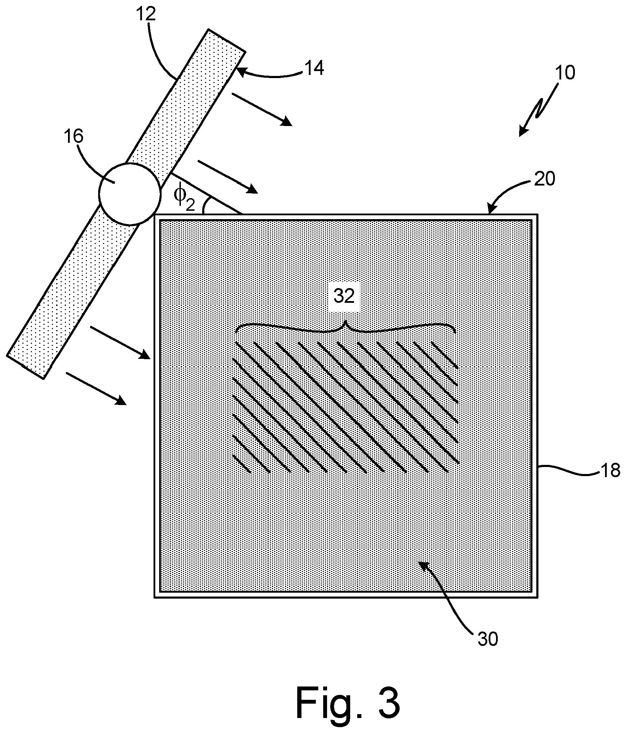

Powder bed fusion machine 10 can use different base powder materials, such as ceramics, polymers, metals, and/or any other materials used as a base powder in powder bed fusion machines. Powder bed fusion machine 10 can use different techniques for fusing the base powder, such as selective laser sintering (SLS), selective laser melting (SLM), electron beam melting (EBM), and/or any other fusion techniques used in powder bed manufacturing. Recoater 12 is a bar that traverses platform 18 to deposit new powder on platform 18 as a first step in the process and after each time the energy source (not shown) sinters a previous layer of powder. Blade or leading edge 14, can be a corner on recoater 12, or a replacement part that attaches to recoater 12. Blade or leading edge 14 is the part of recoater 12 that comes into contact with the powder as recoater 12 spreads a new layer of powder. Blade or leading edge 14 of recoater 12 distributes a layer of base powder material across platform 18. In distributing the layer of base powder material across platform 18, recoater 12 also levels out the powder and ensures the powder is uniform. Recoater 12 may contact previous powder bed layers and previous layers of component 26, 32 (shown in FIGS 2 and 3) as recoater 12 deposits and levels a new layer of powder. After recoater 12 evenly distributes base powder material across platform 18, an energy source (not shown) sinters at least a portion of the layer of base powder bed material. Next, recoater 12 evenly distributes a subsequent layer of base powder bed material across platform 18 and previous layers of component 26, 32 (shown in FIGS. 2 and 3).

Actuator 16 is configured to rotate recoater 12 about axis X₁. Actuator 16 can be a mechanical, electro-mechanical, hydraulic-mechanical, or pneumatic-mechanical device. Actuator 16 can utilize different types of components to convert energy into rotational motion, such as stepping motors, servo motors, hydraulic rotary vanes, pneumatic rotary vanes, and/or any other type of rotational actuator. The rotation of recoater 12, changes approach angle φ₁, which changes the interaction between leading edge 14 of recoater 12 and component 26, 32 (shown in FIGS. 2 and 3). The interaction between leading edge 14 of recoater 12 and the layers of component 26, 32 is important. When configured correctly, approach angle φ₁ will enable recoater 12 to traverse platform 18 and concurrently contact a minimum or a predefined surface area of previous layers of component 26, 32. Minimizing the contact between recoater 12 and component 26, 32 reduces the frictional forces between recoater 12 and component 26, 32, which reduces the likelihood of deformation or collapse of component 26, 32. If approach angle φ₁ is incorrect, leading edge 14 of recoater 12 may contacts too much surface area of component 26, 32 and the frictional forces between leading edge 14 of recoater 12 and component 26, 32 may cause deformation or collapse of component 26, 32. Recoater 12 can also be adjusted in situations where a part or region of component 26, 32 extends above or stands proud of the powder bed. For example, component 26, 32 could have complex geometry with layers overhanging a previous layer of component 26, 32 and also standing proud of a previous layer of the powder bed where the complex geometry has a flat face and an angled face opposite the flat face. If recoater 12 traverses toward the flat face of the overhang of component 26, 32, recoater 12 can contact the flat face and the force from that interaction could result in a build failure. To decrease the likelihood of this failure, approach angle φ₁ can be adjusted so recoater 12 approaches component 26, 32 from the angled face of the overhang and recoater 12 would be less likely to cause deformation or collapse of component 26, 32.

Actuator 22 is configured to rotate platform 18 about axis X₂. Actuator 22 can be a mechanical, electro-mechanical, hydraulic-mechanical, or pneumatic-mechanical device. Actuator 22 can utilize different types of components to convert energy into rotational motion, such as stepping motors, servo motors, hydraulic rotary vanes, pneumatic rotary vanes, and/or any other type of rotational actuator. The rotation of platform 18, changes approach angle φ₁, which changes the interaction between leading edge 14 of recoater 12 and component 26, 32 (shown in FIGS. 2 and 3). The interaction between leading edge 14 of recoater 12 and component 26, 32 is important. When configured correctly, approach angle φ₁ will enable recoater 12 to traverse platform 18 and concurrently contact a minimum or a predefined surface area of previous layers of component 26, 32. Minimizing the contact between recoater 12 and component 26, 32 reduces the frictional forces between recoater 12 and component 26, 32, which reduces the likelihood of deformation or collapse of component 26, 32. If approach angle φ₁ is incorrect, leading edge 14 of recoater 12 may contact too much surface area of component 26, 32 and the frictional forces between leading edge 14 of recoater 12 and component 26, 32 may cause deformation or collapse of component 26, 32.

In the present disclosure, component 26, 32 is a heat exchanger. Heat exchangers are additively manufactured utilizing a layer-by-layer process. Each layer contains a plurality of fins that enhance heat transfer and direct the flow of a fluid, either hot or cold. Typically, two layers of cold air sandwich a layer that handles hot air, and two layers of hot air sandwich a layer that handles cold air. The layering effect allows the heat exchanger to manage heat transfer and control the temperature of a system. Typically the hot flow layers run in a first direction, and the cold layers run in a different direction. Additive manufacturing practices enables the heat exchanger to be a unitary, monolithic component.

FIG. 2 is a top view of powder bed fusion machine 10. As shown in FIG. 2, powder bed fusion machine 10 further includes first layer of component 26, first powder bed 28, and subsequent powder bed 30. Approach angle φ₁ is defined as the angle between first edge 20 and the direction at which recoater 12 is moving. In FIG. 2, component 26 is a heat exchanger and powder bed fusion machine 10 is building a cold layer with a plurality of fins.

In operation of powder bed fusion machine 10, recoater 12 travels across platform 18 and deposits first powder bed 28 as recoater 12 traverses platform 18. Next, an energy source (not pictured) sinters at least a portion of first powder bed 28, creating a first layer of component 26. First layer of component 26 has a plurality of fins all extending in the same direction. Recoater 12 traverses platform 18 to deposit a subsequent powder bed 30 (shown in FIG. 3). Approach angle φ₁ is configured to decrease the instantaneous contact surface area between first layer 26 and leading edge 14. For example, in FIG. 2, recoater 12 has approach angle φ₁ which is at 90 degrees relative first edge 20 of platform 18, such that recoater 12 is traveling parallel to the fins of component 26. By traveling parallel to the fins, the blade 14 of recoater 12 contacts only a small portion of each fin. The above steps are repeated and the reiterative process builds component 26, 32 (shown in FIGS. 2 and 3) layer-by-layer. The layer-by-layer technique enables powder bed machine 10 to make very complex parts in a single manufacturing process. In building a heat exchanger, or any other component, it is typical to have multiple iterations where approach angle φ₁ would not change for several cycles, because the energy source is sintering the same area of powder bed 18 each cycle. However, when the geometry of a component changes, as discussed below with reference to FIG. 3, approach angle φ₁ may need to change.

FIG. 3 is a top view of powder bed fusion machine 10. As shown in FIG. 3, powder bed fusion machine 10 further includes subsequent powder bed 30, and subsequent layer of component 32. Approach angle φ₂ is defined as the angle between first edge 20 and the direction at which recoater 12 is moving for the subsequent layer of component 32. In the embodiment of FIG. 3, powder bed fusion machine 10 is building a hot layer for the heat exchanger described in FIG. 2.

In the present disclosure, once powder bed fusion machine 10 completes layer of component 26, recoater 12 would traverse one last time at approach angle φ₁, then, the energy source would sinter layer of component 32, in a different orientation. Once that layer of component 32 is sintered, approach angle φ₁ is no longer the best angle for recoater 12 to traverse platform 18. In another embodiment, approach angle φ₁ can be changed to approach angle φ₂ while recoater 12 is moving across platform 18.

In calculating approach angle φ₂, subsequent layer of component 32 is analyzed to determine what approach angle φ₂ would provide the least or a predefined contact surface area between leading edge 14 of recoater 12 and subsequent layer of component 32. Decreasing the contact surface area between leading edge 14 of recoater 12 and subsequent layer of component 32 reduces the frictional forces, and reduces the stress on component 26, 32, increasing the probability of success in the layer-by-layer build. Approach angle φ₂ can be calculated by a computer (not pictured) onboard powder bed fusion machine 10. Additionally, powder bed fusion machine 10 can be configured to receive input from a computer, a software program, or an operator that manually inputs approach angle φ₂. Actuator 16 or actuator 22 rotate recoater 12 or platform 18, respectively, to new approach angle φ₂ configured to minimize the instantaneous contact surface area between layer of component 23 and blade or leading edge 14 of recoater 12.

### Discussion of Possible Embodiments

The following are non-exclusive descriptions of possible embodiments of the present invention.

In one embodiment of the present disclosure, a method of forming a component by powder bed fusion includes depositing a bed of metal powder on a platform by moving a recoater blade across the platform at a first angle of approach. A layer of the component is formed by sintering at least a portion of the bed of metal powder. A subsequent bed of metal powder is deposited on the platform by moving the recoater blade across the platform and the bed of metal powder at a second angle of approach. A subsequent layer of the component is formed by sintering at least a portion of the subsequent bed of metal powder.

The method of forming a component by powder bed fusion of the preceding paragraph can optionally include, additionally and/or alternatively, any one or more of the following features, configurations and/or additional components:
Adjusting the second angle of approach while the recoater blade is depositing the subsequent bed of metal powder on the platform;
determining the second angle of approach by analyzing the layer of the component and calculating an angle that minimizes a contact surface area between the recoater blade and the layer of the component as the recoater blade moves across the platform and the bed of metal powder to deposit the subsequent bed of metal powder;
determining the second angle of approach by analyzing the layer of the component and calculating an angle that minimizes a contact surface area between the recoater blade and the layer of the component as the recoater blade moves across the platform, and the bed of metal powder to deposit the subsequent bed of metal powder and the powder bed fusion machine is configured to receive the angle of approach from a software program;
rotating the recoater blade about an axis, via an actuator that is attached to the recoater blade to move the recoater blade from the first angle of approach to the second angle of approach;
rotating the platform about an axis, via an actuator that is attached to the platform, and the rotation of the platform changes an angle of approach of the recoater blade relative to the component; and/or
rotating the recoater blade about an axis, via a first actuator that is attached to the recoater blade; and rotating the platform about an axis, via a second actuator that is attached to the platform, wherein the rotation of the recoater blade and the rotation of the platform changes an angle of approach of the recoater blade relative to the component.

In another embodiment of the present disclosure, a powder bed fusion machine includes a platform and a recoater. The recoater includes a leading edge. The powder bed fusion machine also includes an actuator configured to adjust an angle of approach of the leading edge of the recoater.

The powder bed fusion machine of the preceding paragraph can optionally include, additionally and/or alternatively, any one or more of the following features, configurations and/or additional components:
the recoater is attached to the actuator, and the actuator is configured to rotate the recoater to change the angle of approach of the leading edge of the recoater relative to the first edge of the platform;
a second actuator, where the second actuator is attached to the platform, and the actuator is configured to rotate the platform, and where the first actuator and the second actuator are configured to adjust the angle of approach of the leading edge of the recoater relative to the first edge of the platform;
the angle of approach of the leading edge of the recoater is relative to the first edge of the platform, and the powder bed fusion machine is configured to receive the angle of approach as a parameter entered by a machine operator;
the angle of approach of the leading edge of the recoater is relative to the first edge of the platform, and the powder bed fusion machine is configured to receive the angle of approach from computer software;
the angle of approach of the leading edge of the recoater is relative to the first edge of the platform, and the powder bed fusion machine is configured to receive the angle of approach from computer software;
the platform is attached to the actuator, and the actuator is configured to rotate the platform about an axis to change the angle of approach of the leading edge of the recoater relative to the first edge of the platform; and/or
the powder bed fusion machine includes a computer to calculate the angle of approach of the leading edge of the recoater relative to the first edge of the platform, and the computer minimizes the contact surface friction of the leading edge of the recoater.

In another embodiment, a powder bed fusion machine includes a platform and a recoater blade. The platform includes a first edge. The recoater blade includes a leading edge. The powder bed fusion machine includes at least one actuator configured to adjust an angle of approach of the leading edge of the recoater relative to the first edge of the platform.

The powder bed fusion machine of the preceding paragraph can optionally include, additionally and/or alternatively, any one or more of the following features, configurations and/or additional components:
the platform is attached to the at least one actuator, and the at least one actuator is configured to rotate the platform about an axis to change the angle of approach of the leading edge of the recoater relative to the first edge of the platform;
the recoater is attached to the at least one actuator, and the at least one actuator is configured to rotate the recoater about an axis to change the angle of approach of the leading edge of the recoater relative to the first edge of the platform;
the recoater is attached to a first actuator, and the first actuator is configured to rotate the recoater about a first axis, and the platform is attached to a second actuator and the second actuator is configured to rotate the platform about a second axis;
the first actuator and the second actuator are configured to adjust the angle of approach of the leading edge of the recoater relative to the first edge of the platform; and/or
comprises software configured to calculate the angle of approach.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A method of forming a component by powder bed fusion, wherein the method comprises:
depositing a bed of metal powder on a platform (18) by moving a recoater blade (14) across the platform at a first angle of approach;
forming a layer of the component by sintering at least a portion of the bed of metal powder;
depositing a subsequent bed of metal powder on the platform by moving the recoater blade across the platform and the bed of metal powder at a second angle of approach, wherein the second angle of approach and the first angle of approach are not equal; and
forming a subsequent layer of the component by sintering at least a portion of the subsequent bed of metal powder.

2. The method of claim 1, further comprising:
Adjusting the second angle of approach while the recoater blade is depositing the subsequent bed of metal powder on the platform.

3. The method of claim 1 or 2, further comprising:
determining the second angle of approach by analyzing the layer of the component and calculating an angle that minimizes a contact surface area between the recoater blade and the layer of the component as the recoater blade moves across the platform and the bed of metal powder to deposit the subsequent bed of metal powder, and optionally wherein the powder bed fusion machine is configured to receive the angle of approach from a software program.

4. The method of any preceding claim, further comprising:
rotating the recoater blade about an axis, via an actuator that is attached to the recoater blade to move the recoater blade from the first angle of approach to the second angle of approach and/or
rotating the platform about an axis, via an actuator that is attached to the platform, wherein the rotation of the platform changes an angle of approach of the recoater blade relative to the component.

5. A powder bed fusion machine comprises:
a platform (18);
a recoater (12) comprising:
a leading edge (14); and
an actuator (16) configured to adjust an angle of approach of the leading edge of the recoater.

6. The powder bed fusion machine of claim 5, wherein the recoater is attached to the actuator, and wherein the actuator is configured to rotate the recoater to change the angle of approach of the leading edge of the recoater relative to the first edge of the platform.

7. The powder bed fusion machine of claim 6, further comprising:
a second actuator (22), wherein the second actuator is attached to the platform, and wherein the actuator is configured to rotate the platform, and wherein the first actuator and the second actuator are configured to adjust the angle of approach of the leading edge of the recoater relative to the first edge of the platform.

8. The powder bed fusion machine of claim 6 or 7, wherein the angle of approach of the leading edge of the recoater is relative to the first edge of the platform, and wherein the powder bed fusion machine is configured to receive the angle of approach as a parameter entered by a machine operator or wherein the angle of approach of the leading edge of the recoater is relative to the first edge of the platform, and wherein the powder bed fusion machine is configured to receive the angle of approach from computer software.

9. The powder bed fusion machine of claim 6, 7 or 8, wherein the platform is attached to the actuator, and wherein the actuator is configured to rotate the platform about an axis to change the angle of approach of the leading edge of the recoater relative to the first edge of the platform.

10. The powder bed fusion machine of any of claims 6 to 9, wherein the powder bed fusion machine comprises a computer to calculate the angle of approach of the leading edge of the recoater relative to the first edge of the platform, wherein the computer minimizes the contact surface friction of the leading edge of the recoater.

11. The powder bed fusion machine of any of claims 6 to 10, wherein the platform comprises a first edge; and
the actuator comprises at least one actuator configured to adjust an angle of approach of the leading edge of the recoater relative to the first edge of the platform.

12. The powder bed fusion machine of claim 11, wherein the recoater is attached to a first actuator, wherein the first actuator is configured to rotate the recoater about a first axis, and wherein the platform is attached to a second actuator, wherein the second actuator is configured to rotate the platform about a second axis.

13. The powder bed fusion machine of claim 12, wherein the first actuator and the second actuator are configured to adjust the angle of approach of the leading edge of the recoater relative to the first edge of the platform.

14. The powder bed fusion machine of claim 12 or 13 comprises software configured to calculate the angle of approach.
